# EUROPÄISCHE PATENTSCHRIFT

(11) **EP 1 951 962 B1**
(45) Veröffentlichungstag und Bekanntmachung des Hinweises auf die Patenterteilung: **12.01.2011**
(21) Anmeldenummer: 06819414.1
(22) Anmeldetag: 13.11.2006
(51) Int. Cl.: E02B 3/04, E02B 3/18, E01C 5/06

(54) **VORRICHTUNG ZUR LANDGEWINNUNG AUS KUNSTSTOFFGEBUNDENEN, WASSERDURCHLÄSSIGEN FORMKÖRPERN**
LAND RECLAMATION SYSTEM COMPOSED OF POLYMER-BOUND, WATER-PERMEABLE SHAPED BODIES
DISPOSITIF DE RECUPERATION DE TERRAIN, CONSTITUE DE CORPS MOULE PERMEABLE A L'EAU ET LIE PAR MATIERE SYNTHETIQUE

(30) Priorität: 18.11.2005 DE 102005055540
(43) Veröffentlichungstag der Anmeldung: 06.08.2008
(73) Patentinhaber: BASF SE, 67056 Ludwigshafen (DE)
(72) Erfinder: ROSER, Joachim, 68161 Mannheim (DE); SCHMIDT, Hans Ulrich, 49090 Osnabrück (DE); REESE, Hans-Jürgen, 49401 Damme (DE); LEITNER, Johann, 82140 Olching (DE); EISENHARDT, Andrea, 49377 Vechta (DE)
(86) Internationale Anmeldenummer: PCT/EP2006/068372
(87) Internationale Veröffentlichungsnummer: WO 2007/057366

(56) Entgegenhaltungen:
- DE-U1- 29 711 268
- US-A1- 2002 021 944
- US-A1- 2005 036 839

## Beschreibung

Die Gewinnung von Land an Meeresküsten ist seit langem wichtig für die Besiedlung oder Nutzbarmachung von Flächen. So wurden durch die Landgewinnung an den Meeren Flächen gewonnen, die mit der Zeit landwirtschaftlich genutzt oder sogar besiedelt werden können. Dies ist besonders in Gegenden mit stark wachsender Bevölkerung zur Schaffung von Wohnraum und Ernährungsgrundlagen nach wie vor von großer Bedeutung. Im weiteren leistet die Landgewinnung im Bereich von Küsten und Flussmündungen einen wichtigen Beitrag zum Küstenschutz.

Durch die Landgewinnung können den besiedelten Gebieten trocken gelegte Flächen vorgelagert werden, die bei Fluten einen Schutz darstellen. Darüber hinaus ist in vielen Gegenden das Abspülen der küstennahen Bereiche ein großes Problem, das durch die Gewinnung von vorgelagerten Landflächen gelöst werden kann.

Zumeist erfolgt die Landgewinnung an Meeren mit deutlichen Gezeiten im wesentlichen durch ein System aus Buhnen, Lahnungen, Flecht- und Gestrüppzäunen, die so angebracht sind, dass sie bei Flut zumindest teilweise von Wasser umströmt werden und sich bei Ebbe außerhalb des Meeres befinden. Die Lahnungen unterteilen das Vorland feldartig und belassen schmale Durchlässe für die ein- und ausströmenden Wassermassen, die in Seitengräben geleitet werden. Dadurch wird das Wasser beruhigt und ein Abfließen bei Ebbe verzögert. Im ruhigen Wasser setzen sich dann mehr Sedimente, auch als Schlick bezeichnet, auf dem Meeresboden ab. Bei zurückweichender Flut setzt sich dann nach und nach das zu Schlick gewordene Material an den Buhnen und Zäunen ab, so dass das Land allmählich erhöht wird. Erreicht der Meeresboden die Fluthöhe, werden Gräben ausgehoben und der Schlick zur weiteren Erhöhung auf dem Land verteilt. In den Gräben können sich wieder neue Sedimente absetzen. Das neugewonnene Land wird in der Regel zum Schutz eingedeicht.

Bei einem anderen Verfahren wird bei der Landgewinnung nicht das natürliche Aufschlicken durch das Meer ausgenutzt, sondern es wird zunächst ein Abschlussdeich in das Wasser gebaut, innerhalb dessen Grenzen keine Gezeiten mehr herrschen. Danach werden die Ringdeiche gebaut und bei Ebbe wird das Wasser mit Hilfe einer Pumpstation abgeleitet. Dies führt in kürzeren Zeiten als in Deutschland zur Landgewinnung.

Weiterhin ist bekannt, Konstruktionen aus Abfallstoffen, beispielsweise städtischem Müll, zu errichten, die dann unter Wasser zum Absetzen von Sedimenten führen sollen.

In DD 222 070 wird ein Verfahren zum Küstenschutz und zum Erdstoffauftrag beschrieben, bei dem verankerte Deckwerke aus miteinander verbundenen korrosionsfesten Ringen, insbesondere Wulstringen von Fahrzeugreifen, ausgebracht werden, in denen sich die Sedimente ablagern. Diese Vorrichtungen weisen jedoch eine unzureichende Stabilität auf, und sind schwierig herzustellen.

In JP 17590070 werden Blöcke aus Müll mit Platten aus Kunstharz oder Drahtgeflechten umhüllt und so zur Landgewinnung im Küstenstreifen eingebracht.

In DE 38 42 668 wird ein Verfahren zur Landgewinnung beschrieben, bei dem aus Müll beständiger Kunststoff aussortiert, zerfasert, mit Bindemittel und Sand eingeschlämmt und hinter zuvor gesetzte Spundwände gegeben wird.

Nachteilig ist bei diesen Verfahren, dass der Müll auch umweltgefährdende Stoffe enthält, die zu einer Kontamination der entsprechenden Küstenabschnitte führen kann. Außerdem sind die aus Müll hergestellten Formkörper auf Grund der unterschiedlichen Zusammensetzung des Mülls inhomogen und damit instabil.

In DE 34 38 204 wird eine Vorrichtung zum Absanden von Küsten beschrieben. Diese besteht aus einem künstlichen Riff, das aus vorgefertigten Bauelementen zusammengesetzt ist. Dabei wird eine Unterlage aus Stahlgeflecht auf dem Meeresboden ausgebracht und mit vorgefertigten Elementen bestückt, die wie Brücken auf dem Stahlgeflecht sitzen.

In WO 03/021046 wird eine netzartige Buhne zur Landgewinnung beschrieben, die mit Befestigungselementen auf dem Boden befestigt ist.

WO 2002/092917 A1 beschreibt eine poröse Buhne zur Landgewinnung, die aus einem auf mehreren Pfosten stehenden Schirmgitters mit diversen Öffnungen besteht. Schirmgitter kann aus PE, PP, anderen Polymeren und Polymerblends bestehen.

US 2002/021944 beschreibt ein Verfahren zur Regenerierung von Stränden. Dabei wird das Abstürmen von Sand verhindert, indem Gewebe so angeordnet wird, dass nur das Wasser abströmt, der Sand jedoch zurückgehalten wird.

DE 297 11 268 U1 beschreibt eine wasserdurchlässige Formplatte, die aus Steingranulaten besteht, die mit Kunststoff miteinander verbunden sind. Diese können als wasserdurchlässige Bodenplatten eingesetzt werden.

Aufgabe der Erfindung war es, ein Verfahren zur Gewinnung von Land zu entwickeln, das einfach in der Konstruktion ist, eine besonders hohe mechanische Stabilität aufweist und darüber hinaus durch unterschiedliche Hohlräume gezielt verschiedenen Strömungsverhältnissen angepasst werden kann.

Die Aufgabe konnte überraschenderweise dadurch gelöst werden, dass zur Landgewinnung Vorrichtungen eingesetzt werden, die mindestens einen porösen Verbundstoff aus Steinen und Kunststoffen enthalten, die so angeordnet sind, dass sie zumindest zeitweise von Wasser überspült werden.

Gegenstand der Erfindung ist ein Verfahren zur Gewinnung von Land durch Vorrichtungen, von denen mindestens ein Teil zumindest zeitweise von Wasser umspült und/oder überspült wird, **dadurch gekennzeichnet, dass** die Vorrichtungen einen porösen Verbundstoff aus Steinen und Kunststoffen enthalten.

Zumindest ein Teil der Vorrichtungen zur Landgewinnung ist dabei quer zur Hauptströmungsrichtung des Wassers angeordnet.

Zusätzlich können weitere Vorrichtungen im wesentlichen längs zur Hauptströmungsrichtung des Wassers angeordnet werden, so dass die Fläche feldartig unterteilt ist. Bei den im wesentlichen längs zur Hauptströmungsrichtung des Wassers angeordneten Bauwerken kann es sich ebenfalls um die porösen Formkörper, aber auch um massive Mauern und/oder Flechtwerke handeln. Dabei kann es vorteilhaft sein, wenn zusätzlich Durchlässe in den quer zur Hauptströmungsrichtung des Wassers angeordneten Vorrichtungen vorhanden sind, durch die ein Teil des Wassers abfließen kann. Damit wird vermieden, dass sich das Wasser in den Feldern staut.

Die erfindungsgemäßen Vorrichtungen können wie bei der Gewinnung von Land üblich angeordnet sein. So können sie in einer Ausführungsform feldartig, in Form von geschlossenen oder unterbrochenen, im wesentlichen quer zur Hauptströmungsrichtung des Wassers angeordneten Bauwerken oder unregelmäßig angeordnet sein.

Wenn die Vorrichtungen als unterbrochene Bauwerke ausgestaltet sind, ist es bevorzugt, diese durch geeignete Konstruktionselemente, beispielsweise Klammern und/oder Brücken, insbesondere solchen aus Metall, miteinander zu verbinden. Dabei können auch mehrere Reihen von unterbrochenen Formkörpern hintereinander angeordnet sein. Bei dieser Anordnung ist es bevorzugt, dass nach der Lücke in einer Reihe ein Formkörper in der nächsten Reihe angeordnet ist.

Die Anbringung der erfindungsgemäß verwendeten Vorrichtungen muss in jedem Falle so erfolgen, dass sie zumindest zeitweise von Wasser überspült oder umspült werden. Das Überspülen und/oder Umspülen kann durch den Wellengang erfolgen. An Küstenabschnitten mit Gezeiten werden die Vorrichtungen so angebracht, dass sie sich bei Ebbe außerhalb des Wassers und bei Flut zumindest teilweise innerhalb des Wassers befinden.

Dabei werden die Vorrichtungen von den Wellen bzw. der Flut überspült. Da die porösen Verbundstoffe aus Steinen und Kunststoffen wasserdurchlässig sind, können sie von dem auf ihrer Landseite befindlichen Wasser durchströmt werden. Nach dem Überspülen der Vorrichtungen wird das Wasser beruhigt. Dabei setzen sich die Sedimente ab.

Die porösen Formkörper haben vorzugsweise eine Dicke im Bereich zwischen 20 cm und 2 m.

Die wasserdurchlässigen Formkörper können ein senkrechtes, wandartiges Profil haben.

In einer anderen Ausführungsform der Erfindung haben die wasserdurchlässigen Formkörper ein schräges, in einem beliebigen Winkel ansteigendes bzw. abfallendes Profil. Dabei können sie in Richtung der Seeseite ein schräges, in Richtung der Seeseite abfallendes und in Richtung der Landseite ein senkrechtes Profil oder ein in Richtung der Landseite abfallendes und in Richtung der Seeseite senkrechtes Profil haben.

Die porösen Verbundstoffe aus Steinen und Kunststoff bestehen aus Steinen, die mit einem Kunststoff miteinander verbunden sind. Bei den Kunststoffen kann es sich beispielsweise um Polyurethane, Epoxyharze, ungesättigte Polyesterharze, Acrylate und Methacrylate handeln. Bevorzugt eingesetzt wird Polyurethan.

Die Steine haben zumeist eine Größe von 1 bis 50 cm, bevorzugt von 1 bis 20 cm, besonders bevorzugt von 2 bis 15 cm, insbesondere von 2,5 bis 6,5 cm. Bevorzugt handelt es sich bei den Steinen um Schotter.

Dabei kann es vorteilhaft sein, wenn die Größe der Steine sich innerhalb des Formkörpers ändert. Bevorzugt wird die Größe der Steine je nach Strömungsverhältnissen von der Landseite zur Meerseite und/oder von unter nach oben größer bzw. kleiner.

Die Steine sind durch den Kunststoff nur an ihren Kontaktflächen fest miteinander verbunden. Dadurch ist der Verbundkörper porös, und das Wasser kann in das Innere des Formkörpers einströmen.

Die Steine sind nur oberflächlich mit dem Kunststoff bedeckt. Die Schicht des Kunststoffs auf den Steinen ist zumeist nur wenige Millimeter, vorzugsweise maximal 5 mm, insbesondere 0,1 bis 5 mm, stark. Dadurch wird nur eine gering Menge an Kunststoff für den Verbundkörper benötigt. Trotzdem ist der Verbund der Steine mit dem Kunststoff so fest, dass er auch einer starken Beanspruchung standhält.

Da das Wasser in die porösen Verbund einströmen kann, wird die Energie, mit der das Wasser auf den Verbundkörper auftrifft, durch das Ausweichen des Wassers in Hohlräume besser absorbiert und führt somit auch bei starker Beanspruchung nicht zur Zerstörung des Formkörpers. Außerdem wird dadurch die Stärke der Wellen stark verringert.

Die Größe der eingesetzten Steine und damit auch die Porengröße der Verbundstoffe hängt insbesondere von den jeweiligen Strömungsbedingungen ab. Möglich sind auch Konstruktionen, bei denen die Größe der durchströmbaren Hohlräume innerhalb eines Elementes variiert.

Die zur Landgewinnung eingesetzten Buhnen, Deiche und/oder Lahnungen können ausschließlich aus den Verbundstoffen aus Steinen und Kunststoff bestehen.

In einer weiteren Ausführungsform befindet sich der Verbundkörper auf einem Sockel, beispielsweise aus Beton oder Mauerwerk.

Die Herstellung der erfindungsgemäß eingesetzten Verbundstoffe kann auf unterschiedlichem Wege erfolgen.

Im einfachsten Fall wird eine lose Schüttung der Steine an der gewünschten Stelle und in der gewünschten Form und Größe vorgenommen und auf diese die flüssigen Ausgangskomponenten des Kunststoffs aufgebracht, wo sie aushärten.

Falls der Verbundkörper auf ein Fundament aufgebracht wird, wird zunächst das Fundament in den Boden eingelassen. Dies kann auf üblichem und bekanntem Wege geschehen.

Auf dieses Bauwerk wird der Verbundkörper so aufgebracht, dass er von den Wellen nicht von seinem Platz entfernt werden kann. Dies kann im einfachsten Fall wie oben beschrieben erfolgen. Es ist auch möglich, mit Lücken versehene Buhnen, Deiche und/oder Lahnungen zu errichten und die Verbundstoffe in die Lücken einzubringen.

In allen Fällen kann, wie oben beschrieben, zunächst eine lose Schüttung der Steine erfolgen, auf die die flüssigen Ausgangskomponenten der Kunststoffe, beispielsweise durch Sprühen oder Gießen, aufgebracht werden, wo sie zum Kunststoff aushärten.

In einer bevorzugten Ausführungsform des erfindungsgemäßen Verfahrens werden die Steine mit den flüssigen Ausgangskomponenten der Kunststoffe vermischt und danach auf die gewünschte Stelle aufgebracht, wo der Kunststoff aushärtet.

Als Mischer für die Vermischung der losen Steine mit den Ausgangskomponenten des Kunststoffs können prinzipiell alle Arten von Mischern eingesetzt werden, mit denen eine weitgehend vollständige Benetzung der Steine mit den flüssigen Ausgangskomponenten des Kunststoffs möglich ist. Als besonders geeignet haben sich Mischer erwiesen, die aus einem offenen Behälter, beispielsweise einer Trommel, die vorzugsweise mit Einbauten versehen ist, bestehen. Zur Vermischung kann entweder die Trommel in Drehung versetzt oder die Einbauten bewegt werden.

Derartige Mischer sind bekannt und werden beispielsweise in der Bauindustrie zur Herstellung von Betonmischungen eingesetzt.

Wenn die Mischung direkt auf die zu befestigende Fläche aufgebracht wird, kann es vorteilhaft sein, den Mischer an einem Fahrzeug, beispielsweise einem Traktor, einem Frontlader oder einem LKW anzubringen. Bei dieser Ausführungsform des erfindungsgemäßen Verfahrens kann die Mischung jeweils zu dem Platz transportiert werden, an dem sie aufgebracht werden soll. Nach dem Entleeren des Mischers kann die Mischung manuell, beispielsweise mittels Harken, verteilt werden.

In einer Ausführungsform des erfindungsgemäßen Verfahrens erfolgt die Mischung der Steine mit den flüssigen Ausgangskomponenten des Kunststoffs kontinuierlich. Dazu werden die Steine und die flüssigen Ausgangskomponenten des Kunststoffs kontinuierlich in den Mischer eingetragen und die benetzten Steine kontinuierlich ausgetragen. Bei dieser Verfahrensweise muss darauf geachtet werden, dass die Einsatzstoffe so lange im Mischer verbleiben, dass eine ausreichende Benetzung der Steine erfolgen kann. Zweckmäßigerweise kann eine solche Mischvorrichtung in einer solchen Geschwindigkeit an den zu befestigenden Abschnitten entlang bewegt werden, dass die mit den flüssigen Ausgangskomponenten des Kunststoffs benetzten Steine in einer solchen Menge aus dem Mischer ausgetragen werden, wie sie zur Befestigung benötigt werden. Es ist auch möglich, die kontinuierliche Mischeinrichtung stationär zu betreiben und die aus dem Mischer ausgetragenen benetzten Steine zu dem gewünschten Ort zu transportieren.

In einer weiteren Ausführungsform der kontinuierlichen Ausgestaltung des erfindungsgemäßen Verfahrens kann der Mischer eine rotierende Trommel sein, in die kontinuierlich Steine eingebracht werden. Diese Trommel ist mit Düsen bestückt, die kontinuierlich die Ausgangskomponenten des Kunststoffes auf den Steinen verteilen. Die Rotation der Trommel sorgt hierbei für eine gute Durchmischung von Kunststoff und Steinen. Durch eine Öffnung am Ende der Trommel werden dann kontinuierlich Kunststoff/Stein-Verbunde ausgetragen. Die rotierende Trommel kann dabei horizontal, aber auch in verschiedenen Winkeln geneigt sein, um den Austrag zu fördern.

In einer weiteren Ausführungsform des kontinuierlichen Verfahrens werden die Steine kontinuierlich auf einem Förderband, welches durch einen Tunnel gefahren wird, transportiert. Dieser verfügt über Öffnungen, über die kontinuierlich die Ausgangsstoffe des Kunststoffes auf die Steine ausgetragen werden. Am Ende des Förderbandes fallen die Steine dann in eine offene Mischtrommel, die mit einstellbarer Fördergeschwindigkeit den Verbund austrägt.

In einer anderen Ausführungsform des erfindungsgemäßen Verfahrens werden die Verbundstoffe als Formköper gefertigt und diese an die gewünschten Stellen aufgebracht.

Die Herstellung der Verbundkörper kann ebenfalls auf unterschiedlichem Wege durchgeführt werden.

Bei der Herstellung dieser Formkörper wird die Mischung der Steine mit den flüssigen Ausgangskomponenten des Kunststoffs in eine vorzugsweise nach oben offene Form gegeben, wo der Kunststoff aushärtet. Die Formkörper haben vorzugsweise eine solche Größe, dass sie problemlos transportiert und auf das Fundament aufgebracht werden können. Insbesondere liegt die Größe im Bereich von 100 + 50 x 100 + 50 x 15 + 10 cm.

Bei der Herstellung der Formkörper können die Steine in die Form gegeben und auf diese Schüttung die flüssigen Ausgangskomponenten der Kunststoffe aufgebracht werden. Dort benetzen sie die Oberfläche der Steine und härten zum fertigen Kunststoff aus. In einer bevorzugten Ausführungsform der Herstellung werden die Steine mit den flüssigen Ausgangskomponenten der Kunststoffe in einer Mischeinrichtung vermischt und die so benetzten Steine in die Form gegeben, wo sie zum Formkörper aushärten. Die Vorteile dieser Ausführungsform sind zum einen die bessere Vermischung, zum anderen können Formkörper mit einer größeren Dicke hergestellt werden. Die Zeit für die Mischung sollte dabei mindestens so bemessen sein, dass die Steine möglichst vollständig mit der flüssigen Mischung benetzt sind und höchstens so lange, dass der Kunststoff noch nicht ausgehärtet ist. Außerdem können auch solche Steine zu verwendet werden, die an ihrer Oberfläche lose haftende Verunreinigungen aufweisen. Durch die mechanische Beanspruchung beim Mischvorgang werden diese Verunreinigungen von der Oberfläche der Steine entfernt und können somit nicht mehr die Haftung der Steine aneinander beeinträchtigen.

Die Buhnen, Deiche und/oder Lahnungen können, abhängig von den Strömungsverhältnissen, unterschiedlich ausgestaltet sein.

So können die Konstruktionen ein gerades, wandartiges Profil oder ein schräges, in einem beliebigen Winkel ansteigendes bzw. abfallendes Profil haben. So können die Konstruktionen, an der Seeseite ein schräges und die Landseite ein gerades Profil aufweisen oder umgekehrt.

Als Kunststoffe können die oben beschriebenen Polymere eingesetzt werden. Um eine gute Langzeitstabilität zu erreichen, sollten die Kunststoffe hydrophob ausgerüstet sein.

Bevorzugt eingesetzte Kunststoffe sind Polyurethane und Epoxidharze.

In einer bevorzugten Ausführungsform der Erfindung werden als Kunststoffe insbesondere kompakte Polyurethane eingesetzt.

Zu den bevorzugt verwendeten Polyurethanen ist folgendes zu sagen.

Als Aufbaukomponenten der Polyurethane im Sinne der vorliegenden Erfindung werden ganz allgemein Verbindungen mit freien Isocyanatgruppen und Verbindungen mit Gruppen, die mit Isocyanatgruppen reaktiv sind, verstanden. Gruppen, die mit Isocyanatgruppen reaktiv sind, sind zumeist Hydroxylgruppen oder Aminogruppen. Bevorzugt sind Hydroxylgruppen, da die Aminogruppen sehr reaktiv sind und das Reaktionsgemisch daher rasch verarbeitet werden muss. Die durch Umsetzung dieser Aufbaukomponenten gebildeten Produkte werden im folgenden allgemein als Polyurethane bezeichnet.

Bei beiden Verfahrensvarianten ist es nicht erforderlich, dass die Steine trocken vorliegen. Überraschenderweise gelingt es auch bei Vorliegen von nassen Steinen und sogar unter Wasser, eine gute Haftung zwischen dem Polyurethan und den Steinen zu erhalten.

Als Polyurethane können die üblichen und bekannten Verbindungen dieses Typs eingesetzt werden. Die Herstellung dieser Materialien erfolgt durch Umsetzung von Polyisocyanaten mit Verbindungen mit mindestens zwei aktiven Wasserstoffatomen. Als Polyisocyanate können prinzipiell alle bei Raumtemperatur flüssigen Polyisocyanate, Mischungen und Prepolymere mit mindestens zwei Isocyanatgruppen eingesetzt werden.

Dies können aliphatische lsocyanate, beispielsweise Hexamethylendiisocyanat (HDI), Isophorondiisocyanat (IPDI) oder deren Umsetzungsprodukte mit sich selbst, beispielsweise unter Einbau von Uretdion- oder Isoycanuratgruppen, sein.

Vorzugsweise kommen aromatische Polyisocyanate zum Einsatz, besonders bevorzugt Isomere des Toluylendiisocyanats (TDI) und des Diphenylmethandiisocyanats (MDI), insbesondere Mischungen aus MDI und Polyphenylenpolymethylenpolyisocyanaten (Roh-MDI). Die Polyisocyanate können auch modifiziert sein, beispielsweise durch den Einbau von Isocyanuratgruppen und insbesondere durch den Einbau von Urethangruppen. Die letztgenannten Verbindungen werden durch Umsetzung von Polyisocyanaten mit einem Unterschuss an Verbindungen mit mindestens zwei aktiven Wasserstoffatomen hergestellt und üblicherweise als NCO-Prepolymere bezeichnet. Ihr NCO-Gehalt liegt zumeist im Bereich zwischen 2 und 29 Gew.-%.

Als Verbindungen mit mindestens zwei mit Isocyanatgruppen reaktiven Wasserstoffatomen werden zumeist mehrfunktionelle Alkohole, sogenannte Polyole, oder, weniger bevorzugt, mehrfunktionelle Amine eingesetzt.

In einer bevorzugten Ausführungsform des erfindungsgemäßen Verfahrens werden als Polyurethane kompakte Polyurethane, insbesondere solche mit einer hydrophoben Ausrüstung eingesetzt. Die Hydrophobie kann insbesondere durch Zusatz von hydroxylfunktionellen fettchemischen Komponenten zu mindestens einer der Ausgangskomponenten des Polyurethansystems, bevorzugt zur Polyolkomponente, bewirkt werden.

Es sind eine Reihe von hydroxylfunktionellen fettchemischen Komponenten bekannt, die verwendet werden können. Beispiele sind Rizinusöl, mit Hydroxylgruppen modifizierte Öle wie Traubenkernöl, Schwarzkümmelöl, Kürbiskernöl, Borretschsamenöl, Sojaöl, Weizenkeimöl, Rapsöl, Sonnenblumenöl, Erdnussöl, Aprikosenkernöl, Pistazienkernöl, Mandelöl, Olivenöl, Macadamianussöl, Avocadoöl, Sanddornöl, Sesamöl, Haselnussöl, Nachtkerzenöl, Wildrosenöl, Hanföl, Distelöl, Walnussöl, mit Hydroxylgruppen modifizierte Fettsäureester auf Basis von Myristoleinsäure, Palmitoleinsäure, Ölsäure, Vaccensäure, Petroselinsäure, Gadoleinsäure, Erucasäure, Nervonsäure, Linolsäure, Linolensäure, Stearidonsäure, Arachidonsäure, Timnodonsäure, Clupanodonsäure, Cervonsäure. Bevorzugt eingesetzt werden hierbei das Rizinusöl und dessen Umsetzungsprodukte mit Alkylenoxiden oder Keton-Formaldehyd-Harzen. Letztgenannte Verbindungen werden beispielsweise von der Bayer AG unter der Bezeichnung Desmophen^{®} 1150 vertrieben.

Eine weitere bevorzugt eingesetzte Gruppe von fettchemischen Polyolen kann durch Ringöffnung epoxidierter Fettsäureester bei gleichzeitiger Umsetzung mit Alkoholen und gegebenenfalls folgenden weiteren Umesterungsreaktionen gewonnen werden. Der Einbau von Hydroxylgruppen in Öle und Fette erfolgt in der Hauptsache durch Epoxydierung der in diesen Produkten enthaltenen olefinischen Doppelbindung gefolgt von der Umsetzung der gebildeten Epoxidgruppen mit einem ein- oder mehrwertigen Alkohol. Dabei wird aus dem Epoxidring eine Hydroxylgruppe oder bei mehrfunktionellen Alkoholen eine Struktur mit einer höheren Anzahl an OH-Gruppen. Da Öle und Fette meist Glyzerinester sind, laufen bei den oben genannten Reaktionen noch parallele Umesterungsreaktionen ab. Die so erhaltenen Verbindungen haben vorzugsweise ein Molekulargewicht im Bereich zwischen 500 und 1500 g/mol. Derartige Produkte werden beispielsweise von der Firma Henkel angeboten.

In einer besonders bevorzugten Ausführungsform des erfindungsgemäßen Verfahrens wird als kompaktes Polyurethan ein solches eingesetzt, das herstellbar ist durch Umsetzung von Polyisocyanaten mit Verbindungen mit mindestens zwei mit Isocyanatgruppen reaktiven Wasserstoffatomen, **dadurch gekennzeichnet, dass** die Verbindungen mit mindestens zwei reaktiven Wasserstoffatomen mindestens ein fettchemisches Polyol und mindestens ein mit Phenol modifiziertes aromatisches Kohlenwasserstoffharz, insbesondere ein Inden-Cumaron-Harz enthalten. Diese Polyurethane sowie ihre Aufbaukomponenten weisen eine derart hohe Hydrophobie auf, dass sie prinzipiell sogar unter Wasser aushärten können.

Als mit Phenol modifizierte aromatische Kohlenwasserstoffharze mit einer endständigen Phenolgruppe, werden vorzugsweise mit Phenol modifizierte Inden-Cumaron-Harze, besonders bevorzugt technische Gemische von aromatischen Kohlenwasserstoffharzen verwendet, insbesondere solche, die als wesentlichen Bestandteil Verbindungen der allgemeinen Formel (I) 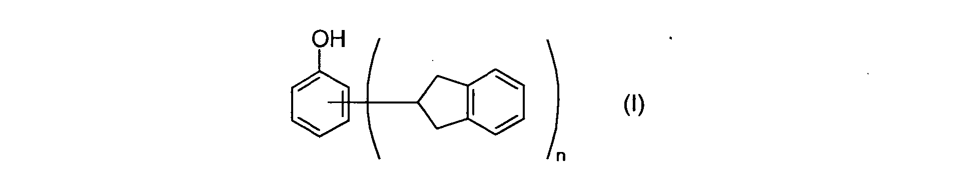 mit n von 2 bis 28 enthalten. Derartige Produkte sind handelsüblich und werden beispielsweise von der Firma Rütgers VFT AG unter dem Handelsnamen NOVARES^{®} angeboten.

Die mit Phenol modifizierten aromatischen Kohlenwasserstoffharze, insbesondere die mit Phenol modifizierten Inden-Cumaron-Harze, weisen zumeist einen OH-Gehalt zwischen 0,5 und 5,0 Gew.-% auf.

Vorzugsweise werden das fettchernische Polyol und das mit Phenol modifizierte aromatische Kohlenwasserstoffharz, insbesondere das Inden-Cumaron-Harz in einem Gewichtsverhältnis von 100 : 1 bis 100 : 50 eingesetzt.

Gemeinsam mit den genannten Verbindungen können weitere Verbindungen mit mindestens zwei aktiven Wasserstoffatomen eingesetzt werden. Auf Grund ihrer hohen Hydrolysebeständigkeit sind Polyetheralkohole bevorzugt. Diese werden nach üblichen und bekannten Verfahren, zumeist durch Anlagerung von Alkylenoxiden an H-funktionelle Startsubstanzen, hergestellt. Die mitverwendeten Polyetheralkohole haben vorzugsweise eine Funktionalität von mindestens 3 und eine Hydroxylzahl von mindestens 400 mgKOH/g, vorzugsweise mindestens 600 mgKOH/g, insbesondere im Bereich von 400 bis 1000 mgKOH/g. Ihre Herstellung erfolgt auf üblichem Wege durch Umsetzung von mindestens dreifunktionellen Startsubstanzen mit Alkylenoxiden. Als Startsubstanzen können vorzugsweise Alkohole mit mindestens drei Hydroxylgruppen im Molekül eingesetzt werden, beispielsweise Glyzerin, Trimethylolpropan, Pentaerythrit, Sorbit, Saccharose. Als Alkylenoxid wird vorzugsweise Propylenoxid eingesetzt.

Der Reaktionsmischung zur Herstellung der Polyurethane können weitere übliche Bestandteile zugesetzt werden, beispielsweise Katalysatoren und übliche Hilfs- und Zusatzstoffe. Insbesondere sollten der Reaktionsmischung Trockenmittel, beispielsweise Zeolithe, zugesetzt werden, um die Anreicherung von Wasser in den Komponenten und damit ein Aufschäumen der Polyurethane zu vermeiden. Der Zusatz dieser Stoffe erfolgt vorzugsweise zu den Verbindungen mit mindestens zwei mit Isocyanatgruppen reaktiven Wasserstoffatomen. Diese Abmischung wird in der Technik häufig als Polyolkomponente bezeichnet. Zur Verbesserung der Langzeitstabilität der Verbundstoffe ist es weiterhin vorteilhaft, Mittel gegen den Angriff von Kleinlebewesen zuzusetzen. Außerdem ist der Zusatz von UV-Stabilisatoren vorteilhaft, um eine Versprödung der Formkörper zu vermeiden.

Die eingesetzten Polyurethane können prinzipiell ohne die Anwesenheit von Katalysatoren hergestellt werden. Zur Verbesserung der Aushärtung können Katalysatoren mitverwendet werden. Als Katalysatoren sollten vorzugsweise solche ausgewählt werden, die eine möglichst lange Reaktionszeit bewirken. Dadurch ist es möglich, dass die Reaktionsmischung lange flüssig bleibt. Prinzipiell ist es, wie beschrieben, möglich, auch ganz ohne Katalysator zu arbeiten.

Die Kombination der Polyisocyanate mit den Verbindungen mit mindestens zwei mit Isocyanatgruppen reaktiven Wasserstoffatomen sollte in einem solchen Verhältnis erfolgen, dass ein stöchiometrischer Überschuss an Isocyanatgruppen, vorzugsweise von mindestens 5 %, insbesondere im Bereich zwischen 5 und 60 % vorliegt.

Die bevorzugt eingesetzten hydrophoben Polyurethane zeichnen sich durch eine besonders gute Verarbeitbarkeit aus. So zeigen diese Polyurethane eine besonders gute Haftung, insbesondere auf feuchten Substraten wie nassem Gestein, insbesondere Schotter. Die Aushärtung der Polyurethane erfolgt trotz der Anwesenheit von Wasser praktisch kompakt. Die eingesetzten kompakten Polyurethane zeigen auch bei dünnen Schichten eine vollständig kompakte Aushärtung.

Durch die hydrophobe Ausrüstung der Kunststoffe wird deren hydrolytischer Abbau wirksam unterdrückt. Die erfindungsgemäßen Vorrichtungen können nach der Landgewinnung an ihrem Platz verbleiben. Dabei leisten sie einen Beitrag zur Befestigung der gewonnen Landfläche und dienen so dem Küstenschutz.

## Patentansprüche

1. Verfahren zur Gewinnung von Land an Küstenlinien durch Vorrichtungen, von denen mindestens ein Teil zumindest zeitweise von Wasser umspült und/oder überspült wird, wobei die Vorrichtungen einen wasserdurchlässigen Formkörper enthalten und die Formkörper so angeordnet sind, dass sie zumindest zeitweise vom Meerwasser überspült werden, so dass zumindest ein Teil des Wassers danach durch den Formkörper in das Meer zurückströmt, **dadurch gekennzeichnet, dass** der wasserdurchlässige Formkörper aus mittels Kunststoff an ihren Kontaktflächen fest miteinander verbundenen Steinen besteht.

2. Verfahren nach Anspruch 1, **dadurch gekennzeichnet, dass** die Formköper auf im Boden gegründeten Fundamenten angeordnet sind.

3. Verfahren nach Anspruch 1, **dadurch gekennzeichnet, dass** die wasserdurchlässigen Formkörper zeitweise vollständig unter Wasser befindlich sind.

4. Verfahren nach Anspruch 1, **dadurch gekennzeichnet, dass** die wasserdurchlässigen Formkörper teilweise unter Wasser befindlich sind.

5. Verfahren nach Anspruch 1, **dadurch gekennzeichnet, dass** die wasserdurchlässigen Formkörper durchgehend angeordnet sind.

6. Verfahren nach Anspruch 1, **dadurch gekennzeichnet, dass** die wasserdurchlässigen Formkörper räumlich getrennt und durch Konstruktionselemente miteinander verbunden angeordnet sind.

7. Verfahren nach Anspruch 1, **dadurch gekennzeichnet, dass** die wasserdurchlässigen Formkörper ein senkrechtes, wandartiges Profil haben.

8. Verfahren nach Anspruch 1, **dadurch gekennzeichnet, dass** die wasserdurchlässigen Formkörper ein schräges, in einem beliebigen Winkel ansteigendes bzw. abfallendes Profil haben.

9. Verfahren nach Anspruch 1, **dadurch gekennzeichnet, dass** die wasserdurchlässigen Formkörper in Richtung der Seeseite ein schräges, in Richtung der Seeseite abfallendes und in Richtung der Landseite ein senkrechtes Profil haben.

10. Verfahren nach Anspruch 1, **dadurch gekennzeichnet, dass** die wasserdurchlässigen Formkörper in Richtung der Landseite ein schräges, in Richtung der Landseite abfallendes und in Richtung der Seeseite ein senkrechtes Profil haben.

11. Verfahren nach Anspruch 1, **dadurch gekennzeichnet, dass** die Vorrichtungen im Wesentlichen quer zur Hauptströmungsrichtung des Wassers verlaufen.

12. Verfahren nach Anspruch 11, **dadurch gekennzeichnet, dass** zusätzlich zu den im Wesentlichen quer zur Hauptströmungsrichtung des Wassers verlaufenden Vorrichtungen längs zur Hauptströmungsrichtung des Wassers verlaufende Vorrichtungen angebracht sind, so dass der Boden feldartig unterteilt ist.

13. Verfahren nach Anspruch 1, **dadurch gekennzeichnet, dass** die Formkörper eine Dicke im Bereich zwischen 20 cm und 2 m aufweist.

## Claims

1. A method of recovering land along coastlines, using devices of which at least some are at least from time to time surrounded and/or overtopped by flowing water, wherein the devices comprise a water-permeable molding and the moldings are arranged such that they are at least from time to time overtopped by flowing seawater, so that at least some of the water thereafter flows back into the sea through the molding, wherein the water-permeable molding consists of stones bound firmly to one another at their contact surfaces by plastic.

2. The method according to claim 1, wherein the moldings are arranged on foundations in the bottom.

3. The method according to claim 1, wherein the water-permeable moldings are present completely underwater from time to time.

4. The method according to claim 1, wherein the water-permeable moldings are present partly underwater.

5. The method according to claim 1, wherein the water-permeable moldings are arranged continuously.

6. The method according to claim 1, wherein the water-permeable moldings are arranged so as to be spatially separated and connected to one another by structural elements.

7. The method according to claim 1, wherein the water-permeable moldings have a perpendicular, wall-like profile.

8. The method according to claim 1, wherein the water-permeable moldings have an oblique profile ascending or descending at any desired angle.

9. The method according to claim 1, wherein the water-permeable moldings have, in the direction of the sea side, an oblique profile descending in the direction of the sea side and, in the direction of the land side, a perpendicular profile.

10. The method according to claim 1, wherein the water-permeable moldings have, in the direction of the land side, an oblique profile descending in the direction of the land side and, in the direction of the sea side, a perpendicular profile.

11. The method according to claim 1, wherein the apparatuses run substantially transversely to the main direction of flow of the water.

12. The method according to claim 11, wherein, in addition to the apparatuses running substantially transversely to the main direction of flow of the water, apparatuses running longitudinally relative to the main direction of flow of the water are installed so that the bottom is divided in a field-like manner.

13. The method according to claim 1, wherein the moldings have a thickness in the range of from 20 cm to 2 m.

## Revendications

1. Procédé de récupération de terrain sur des lignes côtières par des dispositifs dont au moins une partie est balayée et/ou submergée par l'eau au moins une partie du temps, le dispositif contenant un corps moulé perméable à l'eau, les corps moulés étant disposés de telle sorte qu'ils sont immergés au moins une partie du temps dans l'eau de mer et qu'au moins une partie de l'eau revienne ensuite dans la mer à travers les corps moulés, **caractérisé en ce que**
les corps moulés perméables à l'eau sont constitués de blocs reliés solidairement les uns aux autres au moyen de matière synthétique placée sur leurs surfaces de contact.

2. Procédé selon la revendication 1, **caractérisé en ce que** les corps moulés sont disposés sur des fondations enfoncées dans le sol.

3. Procédé selon la revendication 1, **caractérisé en ce qu'**au moins une partie du temps, les corps moulés perméables à l'eau sont situés complètement sous eau.

4. Procédé selon la revendication 1, **caractérisé en ce que** les corps moulés perméables à l'eau sont situés en partie en dessous de l'eau.

5. Procédé selon la revendication 1, **caractérisé en ce que** les corps moulés perméables à l'eau sont disposés en continu.

6. Procédé selon la revendication 1, **caractérisé en ce que** les corps moulés perméables à l'eau sont séparés spatialement et sont reliés les uns aux autres par des éléments de construction.

7. Procédé selon la revendication 1, **caractérisé en ce que** les corps moulés perméables à l'eau ont un profil vertical en forme de paroi.

8. Procédé selon la revendication 1, **caractérisé en ce que** les corps moulés perméables à l'eau ont un profil oblique en pente montante ou descendante sous un angle quelconque.

9. Procédé selon la revendication 1, **caractérisé en ce que** les corps moulés perméables à l'eau ont un profil oblique en direction de la mer, un profil descendant en direction de la mer et un profil vertical en direction de la terre.

10. Procédé selon la revendication 1, **caractérisé en ce que** les corps moulés perméables à l'eau ont un profil oblique en direction de la terre, un profil descendant en direction de la terre et un profil vertical en direction de la mer.

11. Procédé selon la revendication 1, **caractérisé en ce que** les dispositifs s'étendent essentiellement transversalement par rapport à la direction principale d'écoulement de l'eau.

12. Procédé selon la revendication 11, **caractérisé en ce qu'**en plus des dispositifs qui s'étendent essentiellement transversalement par rapport à la direction principale d'écoulement de l'eau, des dispositifs qui s'étendent longitudinalement par rapport à la direction d'écoulement principale de l'eau sont disposés de telle sorte que le sol soit divisé en champs.

13. Procédé selon la revendication 1, **caractérisé en ce que** les corps moulés ont une épaisseur comprise dans la plage de 20 cm à 2 m.
